# EUROPEAN PATENT SPECIFICATION

(11) **EP 2 207 840 B1**
(45) Date of publication and mention of the grant of the patent: **02.01.2013**
(21) Application number: 08842983.2
(22) Date of filing: 24.10.2008
(51) Int. Cl.: C08J 5/12, B32B 25/08, C09J 183/04

(54) **METHOD OF BONDING SILICONE RUBBER PARTS**
VERFAHREN ZUM VERBINDEN VON SILIKONKAUTSCHUKTEILEN
PROCÉDÉ DE COLLAGE DE PIÈCES EN CAOUTCHOUC DE SILICONE

(30) Priority: 26.10.2007 JP 2007279338
(43) Date of publication of application: 21.07.2010
(73) Proprietor: Dow Corning Toray Co., Ltd., Tokyo, 100-0004 (JP)
(72) Inventor: MORIMOTO, Hirotoki, Ichihara-shi Chiba 299-0108 (JP); TSUJI, Yuichi, Ichihara-shi Chiba 299-0108 (JP)
(74) Representative: Gillard, Richard Edward
(86) International application number: PCT/JP2008/069831
(87) International publication number: WO 2009/054552

(56) References cited:
- WO-A-2006/120186
- JP-A- 11 302 395
- US-A1- 2002 037 963
- US-A1- 2002 129 898

## Description

### Technical Field

The present invention relates to a method of bonding silicone rubber materials by using a hydrosilylation-curable silicone rubber composition that contains powdered calcium carbonate.

### Background Art

Known in the art is a silicone rubber composition that is curable by a hydrosilylation reaction and contains a powdered calcium carbonate. Such a composition consists of a diorganopolysiloxane that has in one molecule at least two alkenyl groups, a powdered calcium carbonate, an organopolysiloxane that has in one molecule at least two silicon-bonded hydrogen atoms, and a platinum-type catalyst (Unexamined Patent Application Publication (hereinafter referred to as "Kokai") 2002-038016 (equivalent to US 2002/0037963 A1), Kokai 2002-285130 (equivalent to US 2002/0129898 A1), Kokai 2005-082661. These silicone rubber compositions demonstrate good adhesion to silicone rubber and possess excellent physical properties such as relative elongation.

However, when the aforementioned compositions are used for bonding silicone rubber pieces, curing of the composition at room temperature requires 10 to 24 hours, and this results in low production efficiency.

### Disclosure of Invention

On the other hand, an attempt has been made to shorten the curing time of an adhesive-agent layer formed by the aforementioned silicone rubber compositions by heating the composition in a hot-air vulcanization furnace, an oven. However, this led to noticeable foaming in the adhesive-agent layer. Furthermore, depending on the size and shape of the silicone rubber parts, it is understood that heating during curing of the silicone rubber composition causes thermal expansion, which deforms the size and/or shape of the obtained products.

It is an object of the present invention to provide such a method of bonding silicone rubber materials that reduces foaming in the adhesive-agent layer, shortens time of curing of the adhesive-agent layer, and is based on the use of a hydrosilylation-curable silicone rubber composition which contains powdered calcium carbonate.

The objects of the invention are achieved by a method of bonding silicone rubber parts characterized by placing an adhesive-agent layer formed from a hydrosilylation-curable silicone rubber composition
between silicone rubber parts and then irradiating the adhesive-agent layer with high-frequency or microwave radiation,
wherein the hydrosilylation-curable silicone rubber composition comprises at least the following components: 100 parts by mass of a dioranopolysiloxane (A) which contains in one molecule on average at least two alkenyl groups; an organopolysiloxane (B) which contains in one molecule on average at least two silicon-bonded hydrogen atoms {the mole ratio of the silicon-bonded hydrogen atoms contained in this component to the alkenyl groups of component (A) ranges from 0.5 to 5}; 5 to 100 parts by mass of a calcium carbonate powder (C); and a hydrosilylation catalyst (D) (in an amount sufficient to accelerate curing of the aforementioned hydrosilylation-curable silicone rubber composition).

The silicone rubber part suitable for the method may comprise a synthetic fiber fabric coated with a layer of silicone rubber. Such a a fabric can be used for manufacturing an airbag by overlapping silicone rubber treated surfaces of pieces of the aforementioned fabric, placing an adhesive-agent layer formed from a hydrosilylation-curable silicone rubber composition between the overlapped areas and then irradiating the adhesive-agent layer with high-frequency or microwave radiation, wherein the hydrosilylation-curable silicone rubber composition comprises at least the following components: 100 parts by mass of a dioranopolysiloxane (A) which contains in one molecule on average at least two alkenyl groups; an organopolysiloxane (B) which contains in one molecule on average at least two silicon-bonded hydrogen atoms {the mole ratio of the silicon-bonded hydrogen atoms contained in this component to the alkenyl groups of component (A) ranges from 0.5 to 5}; 5 to 100 parts by mass of a calcium carbonate powder (C); and a hydrosilylation catalyst (D) (in an amount sufficient to accelerate curing of the aforementioned hydrosilylation-curable silicone rubber composition).

The hydrosilylation-curable silicone rubber composition may further comprise a silica powder (E) {used in an amount of 1 to 100 parts by mass for 100 parts by mass of component (A)} and/or a quartz powder (F) having an average particle size in the range of 0.01 to 3.0 µm {used in an amount of 5 to 100 parts by mass for 100 parts by mass of component (A)}.

The hydrosilylation-curable silicone rubber composition may further comprise fine powder (G) selected from a metal oxide with magnetic properties, a carbon black, or a dielectric substance {used in an amount of 1 to 50 parts by mass four 100 parts by mass of component (A)}.

The method of the invention is efficient in that during adhesive bonding of silicone rubber parts with the use of a hydrosilylation-curable silicone rubber composition that contains a powdered calcium carbonate. It becomes possible to shorten bonding-process time and to reduce undesirable foaming in the adhesive-agent layer.

### Best Mode for Carrying Out the Invention

According to the method of the invention, the silicone rubber parts may comprise silicone rubber molded products, as well as composite products obtained by integrating silicone rubber parts and substrates. The substrate material can be made from metal, glass, synthetic fiber fabric, or can be molded from thermoplastic or thermosetting resin. A composite product may comprise, e.g., a product made from synthetic fiber fabric coated with a layer of silicone rubber. The aforementioned synthetic fiber fabric coated with a layer of silicone rubber is obtained either by impregnating the synthetic fiber fabric with a curable silicone rubber composition, coating the surface of the aforementioned fabric with a curable silicone rubber composition, or performing both the impregnating and coating steps and then curing the curable silicone rubber composition. The above treatment can be performed only on the surface of the synthetic fiber fabric, inside of the synthetic fiber fabric, one surface of the synthetic fiber fabric, or both surfaces of the synthetic fiber fabric.

The synthetic fiber fabric may comprise Nylon 6, Nylon 66, Nylon 46, or a similar polyamide-fiber fabric; polyethylene-terephthalate, polybutylene-terephthalate, or a similar polyester-fiber fabric; a polyacrylonitrile-fiber fabric; an aramid-fiber fabric; a polyether-imide fiber fabric; a polysulfone-based-fiber fabric; a carbon-fiber fabric; a Rayon-fiber fabric; a polyethylene-fiber fabric or a similar polyolefin-fiber fabric; or a nonwoven textile product made from the aforementioned fibers. Among the above fabrics, most preferable from the viewpoint of low cost and high strength are polyamide-fiber fabrics or polyester-fiber fabrics. Although there are no special restrictions with regard to the choice of the fiber fabric, a plain woven fabric is preferable from the viewpoint of better productivity of the process and thickness control.

The adhesive-agent layer formed from the hydrosilylation-curable silicone rubber composition which comprises at least the following components: 100 parts by mass of a dioranopolysiloxane (A) which contains in one molecule on average at least two alkenyl groups; an organopolysiloxane (B) which contains in one molecule on average at least two silicon-bonded hydrogen atoms {the mole ratio of the silicon-bonded hydrogen atoms contained in this component to the alkenyl groups of component (A) ranges from 0.5 to 5}; 5 to 100 parts by mass of a calcium carbonate powder (C); and a hydrosilylation catalyst (D) (in an amount sufficient to accelerate curing of the aforementioned hydrosilylation-curable silicone rubber composition), is placed between the aforementioned silicone rubber parts. When a silicone rubber part is a composite produce made, e.g., from a synthetic fiber fabric coated with a silicone rubber layer, at least a part of the surface of the silicone rubber layer on one product should be bonded to at least one part of the surface of the silicone rubber layer on the other product through the aforementioned adhesive-agent layer formed from the hydrosilylation-curable silicone rubber composititon,

The shape, width, thickness, and other characteristics of the adhesive-agent layer are selected with reference to such factors as the shape of the bonding region, required strength of bonding, etc. The adhesive-agent layer of a predetermined thickness is obtained, e.g., by applying the hydrosilylation-curable silicone rubber composition which comprises at least the following components: 100 parts by mass of a dioranopolysiloxane (A) which contains in one molecule on average at least two alkenyl groups; an organopolysiloxane (B) which contains in one molecule on average at least two silicon-bonded hydrogen atoms {the mole ratio of the silicon-bonded hydrogen atoms contained in this component to the alkenyl groups of component (A) ranges from 0.5 to 5}; 5 to 100 parts by mass of a calcium carbonate powder (C); and a hydrosilylation catalyst (D) (in an amount sufficient to accelerate curing of the aforementioned hydrosilylation-curable silicone rubber composition), onto the surface of one of the silicone rubber parts, overlapping the coated part with another silicone rubber part, and either adjusting the thickness of the adhesive-agent layer with the use of a thickness gauge or by compressing them to a predetermined gap between two plates or between two rollers.

The powdered calcium carbonate is an indispensable component that imparts to the composition the property of adhesion to the silicone rubber parts. At the same time; this component imparts excellent physical properties, such as high elongation, to a cured product of the hydrosilylation-curable silicone rubber composition. The aforementioned composition is liquid at room temperature, and an advantage thereof is that it does not contain any solvents and therefore can be easily handled under industrial conditions in operations such as adjustment of the adhesive-agent layer, storage, etc. There are no restrictions with regard to viscosity of the hydrosilylation-curable silicone rubber composition at 25°C; but this property is recommended to range from 150 to 2,000 Pa·s, preferably 200 to 1,000 Pa·s, and most preferably, 300 to 1,000 Pa·s.

The diorganopolysiloxane (A) that contains in one molecule on average at least two alkenyl groups is one of the main component of the hydrosilylation-curable silicone rubber composition. The alkenyl groups are exemplified by vinyl, allyl, butenyl, pentenyl, hexenyl, and heptenyl groups, of which the vinyl group is preferable. The alkenyl group may be present at the molecular terminals, as well as in the side chains, or in both. Silicon-bonded organic groups other than alkenyl groups of component (A) may be exemplified by methyl, ethyl, propyl, butyl, pentyl, hexyl, or similar alkyl groups; phenyl, tolyl, xylyl, or similar aryl groups; 3-chloropropyl, 3,3,3-trifluoropropyl, or similar halogenated alkyl groups, of which methyl and phenyl groups are preferable. It is recommended that component (A) have essentially a linear molecular structure, but within the limits not in contradiction with the object of the invention, the molecular structure can be partially branched. There are no special restrictions with regard to viscosity of component (A) at 25°C, but it may be recommended to have a viscosity in the range of 100 to 1,000,000 mPa·s, preferably 100 to 500,000 mPa·s.

The organopolysiloxane that represents component (B) and that contains in one molecule on average two or more silicon-bonded hydrogen atoms is a curing agent of the hydrosilylation-curable silicone rubber composition that reacts with and cures aforementioned component (A). There are no special restrictions with regard to the molecular structure of component (B), and this component may have, e.g., a linear, branched, cyclic, or resin-like three-dimensional net-like molecular structure. Silicon-bonded organic groups contained in component (B) may be represented by methyl, ethyl, propyl, butyl, pentyl, hexyl, or similar alkyl groups; phenyl, tolyl, xylyl, or similar aryl groups; benzyl, phenethyl, or similar aralkyl groups; 3-chloropropyl, 3,3,3-trifluoropropyl, or similar halogenated alkyl groups. Most preferable are methyl groups. Component (B) may have a viscosity at 25°C in the range of 1 to 1,000,000 mPa·s.

Component (B) should be contained in the hydrosilylation-curable silicone rubber composition in an amount such that the mole ratio of the silicon-bonded hydrogen atoms of this component to alkenyl groups of component (A) ranges from 0.5 to 5, preferably 0.6 to 3, and most preferably 0.6 to 2.

The powdered calcium carbonate that constitutes component (C) is a component that is used to improve adhesion of the hydrosilylation-curable silicone rubber composition to silicone rubber, as well as to impart excellent physical properties such as high relative elongation to cured products of the aforementioned hydrosilylation-curable silicone rubber composition. There are no special restrictions with regard to the BET-specific surface area of component (C), but it may be recommended that this property be in the range of 5 to 50 m²/g, preferably 10 to 50 m²/g. The average particle size of component (C) is selected with reference to physical strength and adhesion to silicone rubber, but, in general, the average size may range from 0.01 to 2.0 µm, preferably from 0.05 to 2.0 µm. The average particle size of component (C) can be calculated, e.g., by conversion from the BET-specific surface area. The powdered calcium carbonate of component (C) can be exemplified by heavy (or dry-process-grinded) calcium carbonate powder, light (or precipitated) calcium carbonate powder. Most preferable is light (or precipitated) calcium carbonate powder that is surface treated with a fatty acid, a resin acid, or a similar organic acid.

The content of component (C) in the hydrosilylation-curable silicone rubber composition ranges from 5 to 100 parts by mass, preferably 5 to 60 parts by mass, and most preferably 15 to 60 parts by mass for 100 parts by mass of component (A). If component (C) is used in an amount less than the recommended lower limit, this will impair adhesion of the silicone rubber composition to silicone rubber. If, on the other hand, component (C) is used in an amount exceeding the recommended upper limit, it will be difficult to obtain a uniform composition.

Hydrosilylation catalyst (D) is a curing catalyst for accelerating the curing of the hydrosilylation-curable silicone rubber composition. Component (D) can be exemplified by a platinum-type, a rhodium-type, an iridium-type, a palladium-type, or a ruthenium-type catalyst. Among these, a platinum-type catalyst is preferable. The platinum-type catalyst can be exemplified by finely powdered platinum, platinum black, chloroplatinic acid, platinum tetrachloride, alcohol-modified chloroplatinic acid, platinum complex of olefin, platinum complex of alkenylsiloxane, or platinum complex of carbonyl. The platinum-type catalyst can be a similar thermoplastic organic resin powder which containing aforementioned platinum-type catalysts as well. The thermoplastic organic resin can be exemplified by methylmethacrylate resin, polycarbonate resin, polystyrene resin , silicone resin, etc.

There are no special restrictions with regard to amounts in which Component (D) can be used in the hydrosilylation-curable silicone rubber composition provided that the added amount accelerates curing of the aforementioned silicone rubber composition. However, it may be recommended that component (D) be used in an amount such that the content of metallic platinum of component (D) range from 0.5 to 100 parts by mass and preferably 1 to 60 parts by mass for 1,000,000 parts by mass of component (A).

In order to improve the physical strength of silicone rubber obtained by curing the hydrosilylation-curable silicone rubber composition, the silicone rubber composition can be further combined with silica powder (E). The component (E) can be exemplified by fumed silica, precipitated silica, baked silica, or the aforementioned silica powder surface treated with an organic silicon compound or a cyclic diorganosiloxane oligomer. To sufficiently improve the physical strength of the obtained adhesive-agent composition, it may be recommended to use a silica powder having a BET-specific surface area equal to or greater than 50 m²/g, as component (E).

Component (E) can be added to the hydrosilylation-curable silicone rubber composition in an arbitrary amount, but in order to improve physical strength of the obtained silicone rubber, it may be recommended to add component (E) in the amount of 1 to 100 parts by mass, preferably 1 to 50 parts by mass, for 100 parts by mass of component (A).

The hydrosilylation-curable silicone rubber composition can be further combined with quartz powder (F). The preferable average particle size of component (F) ranges from 0.01 to 3.0 µm, more preferably 0.1 to 2.0 µm. There are no special restrictions with regard to the particle shape of component (F), and the particles may be spherical, plate-like, needle-like, or irregular in shape. The average size of the particles can be determined, e.g., as a weight-average particle size (or a median-diameter), from particle-size distribution measurement instrument that employs a laser-beam diffraction method or a similar analyzing means.

It may be recommended that component (F) is used in the aforementioned silicone rubber composition in an amount of 5 to 100 parts by mass, preferably 5 to 60 parts by mass for 100 parts by mass of component (A). If component (F) is added in an amount less than the recommended lower limit, it may be difficult to provide sufficient improvement in the cohesive failure factor of the silicone rubber composition of the invention. If, on the other hand, the added amount of component (F) exceeds the recommended upper limit, it may be difficult to obtain a uniform composition.

The hydrosilylation-curable silicone rubber composition can be further combined with component (G), which is a substance selected from a fine metal oxide powder with magnetic properties, a carbon black, or a fine dielectric powder. Finely powdered metal oxide with magnetic properties can be exemplified by triiron tetraoxide, γ-diiron trioxide, magnetite, manganese zinc ferrite, nickel zinc ferrite, or a similar finely powdered ferrous oxide powder with magnetic properties. Carbon black can be exemplified by acetylene black. Other examples include fine dielectric powder; barium titanate, barium titanate zirconate or a similar finely powdered substance with ferroelectric properties; strontium titanate or a similar finely powdered substance with paraelectric properties. To prevent coloring of the composition, it is preferable to use barium titanate or barium titanate zirconate. It is also recommended that component (G) have a specific surface area equal to or greater than 35 m²/g, preferably equal to or greater than 50 m²/g. When the specific surface area of component (G) is above the recommended lower limit, the component may be dispersed to a sufficient degree in the composition whereby it preserves its physical properties. It is recommended that the average particle size of component (G) be equal to or less than 10 µm.

Component (G) can be added to the composition in an arbitrary amount, but it may be recommended to use it in an amount of 1 to 50 parts by mass, preferably 5 to 25 parts by mass.

If necessary, the hydrosilylation-curable silicone rubber composition may incorporate other arbitrary additives such as fumed titanium oxide, diatomaceous earth, aluminum oxide, aluminosilicate, magnesium carbonate, zinc oxide, aluminum hydroxide, silver, nickel, or a similar inorganic filler; or the aforementioned fillers surface treated with organic silicon compounds or cyclic diorganopolysiloxane oligomers.

In order to improve adhesive properties, the hydrosilylation-curable silicone rubber composition can be combined with an adhesion-imparting agent such as silane-coupling agents, titanium compounds, aluminum compounds, zirconium compounds, etc. Although there are no special restrictions with regard to the amounts in which such adhesion-imparting agents can be added, it may be recommended to add them in the amount of 0.01 to 10 parts by mass for 100 parts by mass of component (A).

In order to improve storage stability or industrial handleability, the hydrosilylation-curable silicone rubber composition can be further combined with acetylene-type compounds, enyne compounds, organosiloxane compounds with a content of vinyl groups in one molecule equal to or greater than 5 mass %, triazols, phosphines, mercaptanes, hydrozines, or similar curing inhibitors. Although there are no special restrictions with regard to the amount in which these curing inhibitors can be used, it may be recommended to add them in an amount of 0.01 to 5 parts by mass for 100 parts by mass of component (A).

In order to improve long-term storage stability, the hydrosilylation-curable silicone rubber composition may be further combined with a diorganopolysiloxane (H), which has a viscosity ranging from 5 to 200 mPa·s and is capped at both molecular terminals with hydroxyl groups. Such component (H) can be exemplified by a dimethylpolysiloxane capped at both molecular terminals with hydroxyl groups, a copolymer of dimethylsiloxane and methylphenylsiloxane capped at both molecular terminals with hydroxyl groups, or a copolymer of dimethylsiloxane and methylvinylsiloxane capped at both molecular terminals with hydroxyl groups. Component (H) can be added in the amount of 0.1 to 10 parts by mass for 100 parts by mass of component (A).

There are no special restrictions with regard to the method of preparation of the hydrosilylation-curable silicone rubber composition, and the composition can be prepared by mixing components (A) through (D), if necessary, with other arbitrary components. However, if the silicone rubber composition contains component (E), it is recommended that a base mixture should be prepared by mixing components (A) and (E) under heating conditions and then adding components (B) through (D) and the remaining arbitrary components. Furthermore, in preparation of the base mixture, an organic silicon compounds can be added to this mixture, and the surfaces of particles of component (E) can be treated *in situ.* The composition can be prepared by using a two-roll mill, a kneader-mixer, a Ross mixer, or any other conventional kneading or mixing equipment.

The adhesive-agent layer between the silicone parts is cured by irradiating the adhesive-agent layer with high-frequency or microwave radiation. High-frequency radiation can range from 0.3 MHz to 300 MHz, and microwave radiation can range from 300 MHz to 300,000 MHz, including UHF and SHF bands. Normally, microwave radiation with a frequency range of 900 MHz to 4,000 MHz is used.

Intensity of the high-frequency wave and microwave radiation depends on the type of silicone parts and curing time of the adhesive-agent layer in the curing process. Normally, greater radiation intensity of high-frequency and microwave radiation shortens curing time. It may be recommended that such intensity of the high-frequency wave and microwave radiation should be in the range of 100 to 1500 W as the rated output of high-frequency radiation (specified by JIS C9250), preferably 150 to 800 W. The duration of radiation of high-frequency and microwave radiation can be selected with reference to radiation intensity, types of silicone parts, and curing time of the adhesive-agent layer. When the silicone parts comprise integrated composite parts having substrates in the form of synthetic fiber fabrics, molded thermoplastic resin products, or molded thermosetting plastic products, it is recommended that the duration of radiation with microwave or high-frequency radiation and intensity of radiation should be selected so as not to damage the substrate.

### [Examples]

The invention will be further described with reference to practical and comparative examples. But, the present invention is not limited only thereto. In these examples, the values of viscosity will correspond to viscosities measured at 25°C.

### [Manufacturing Example 1]

A uniform mixture was prepared from the following components: 100 parts by mass of dimethylpolysiloxane which was capped at both molecular terminals with dimethylvinylsiloxy groups and had a viscosity of 40,000 mPa·s; 40 parts by mass of fumed silica having a BET-specific surface area of 225 m²/g; 7 parts by mass of hexamethyldisilazane used as a surface-treating agent for the silica; and 2 part by mass of water. After the components were mixed to uniformity, mixing was continued for 2 hours with heating under reduced pressure and at a temperature of 170°C, whereby a base mixture was prepared.
Following this, 15 parts by mass of the obtained base mixture were combined with 45 parts by mass of precipitated calcium carbonate powder (a product of Shiraishi Kogyo Co., Ltd., trademark Hakuenka CCR; average particle size: 0.12 µm, calculated by conversion from BET-specific surface area) having a BET-specific surface area of 18 m²/g and surface treated with a fatty acid; 84.4 parts by mass of dimethylpolysiloxane which was capped at both molecular terminals with dimethylvinylsiloxy groups and had a viscosity of 40,000 mPa·s; 1.5 parts by mass of dimethylpolysiloxane which was capped at both molecular terminals with hydroxyl groups and had a viscosity of 40 mPa·s; 0.95 part by mass of a copolymer of methylhydrogensiloxane and dimethylsiloxane which was capped at both molecular terminals with trimethylsiloxy groups and had a viscosity of 13 mPa·s (this component had in one molecule an average of 3 silicon-bonded hydrogen atoms; the mole ratio of silicon-bonded hydrogen atoms of this component to vinyl groups of dimethylpolysiloxane of the aforementioned silicone rubber composition was equal to 0.62); 1.91 parts by mass of dimethylpolysiloxane which was capped at both molecular terminals with dimethylhydrogensiloxy groups and had a viscosity of 9.5 mPa·s (the mole ratio of silicon-bonded hydrogen atoms of this component to vinyl groups of dimethylpolysiloxane of the aforementioned silicone rubber composition was equal to 0.93); and a 1,3-divinyltetramethyldisiloxane solution of a platinum complex of divinyltetramethyldisiloxane (added in an amount such that the content of metal platinum in the present catalyst comprised 45 parts by mass for 1,000,000 parts by mass of the dimethylpolysiloxane that was capped at both molecular terminals with dimethylvinylsiloxy groups and had a viscosity of 40,000 mPa·s). Thus, the silicone rubber composition (1) was prepared.

### [Manufacturing Example 2]

The silicone rubber composition (2) was obtained in the same manner as in Manufacturing Example 1, except that 20 parts by mass of quartz powder (Crystallite 5X, the product of Tatsumori Co., Ltd.) having an average particle size of 1.5 µm was further added per 15 parts by mass of the base mixture.

### [Manufacturing Example 3]

The silicone rubber composition (3) was obtained in the same manner as in Manufacturing Example 1, except that 20 parts by mass of quartz powder (Crystallite 5X, the product of Tatsumori Co., Ltd.) having an average particle size of 1.5 µm; and 8.50 parts by mass of barium titanate were further added per 15 parts by mass of the base mixture.

### [Manufacturing Example 4]

The silicone rubber composition (4) was obtained in the same manner as in Manufacturing Example 1, except that 20 parts by mass of quartz powder (Crystallite 5X, the product of Tatsumori Co., Ltd.) having an average particle size of 1.5 µm; and 8.50 parts by mass of acetylene black were further added per 15 parts by mass of the base mixture.

### [Manufacturing Example 5]

A uniform mixture was prepared from the following components: 100 parts by mass of dimethylpolysiloxane which was capped at both molecular terminals with dimethylvinylsiloxy groups and had a viscosity of 40,000 mPa·s; 40 parts by mass of fumed silica having a BET-specific surface area of 225 m²/g; 7 parts by mass of hexamethyldisilazane used as a surface-treating agent for the silica; and 2 part by mass of water. After the components were mixed to uniformity, mixing was continued for 2 hours under reduced pressure and with heating at a temperature of 170°C, whereby a base mixture was prepared.

Following this, 40.7 parts by mass of the obtained base mixture were combined with 20 parts by mass of precipitated calcium carbonate powder (a product of Shiraishi Kogyo Co., Ltd., trademark Hakuenka CCR; average particle size: 0.12 µm (calculated by conversion from BET-specific surface area) having a BET-specific surface area of 18 m²/g and surface treated with a fatty acid; 20 parts by mass of a quartz powder having an average particle size of 1.5 µm (the product of Tatsumori Co., Ltd.); 84.4 parts by mass of a dimethylpolysiloxane which was capped at both molecular terminals with dimethylvinylsiloxy groups and had a viscosity of 40,000 mPa·s; 1.5 parts by mass of dimethylpolysiloxane which was capped at both molecular terminals with hydroxyl groups and had a viscosity of 40 mPa·s; 0.93 part by mass of a copolymer of methylhydrogensiloxane and dimethylsiloxane which was capped at both molecular terminals with trimethylsiloxy groups and had a viscosity of 13 mPa·s (this component had in one molecule an average of 3 silicon-bonded hydrogen atoms; the mole ratio of silicon-bonded hydrogen atoms of this component to vinyl groups of dimethylpolysiloxane of the aforementioned silicone rubber composition was equal to 0.56); 1.81 parts by mass of dimethylpolysiloxane which was capped at both molecular terminals with dimethylhydrogensiloxy groups and had a viscosity of 9.5 mPa·s (the mole ratio of silicon-bonded hydrogen atoms of this component to vinyl groups of dimethylpolysiloxane of the aforementioned silicone rubber composition was equal to 0.81); and a 1,3-divinyltetramethyldisiloxane solution of a platinum complex of divinyltetramethyldisiloxane (added in an amount such that the content of metal platinum in the present catalyst comprised 45 parts by mass for 1,000,000 parts by mass of the dimethylpolysiloxane capped at both molecular terminals with dimethylvinylsiloxy groups and had a viscosity of 40,000 mPa·s). Thus, the silicone rubber composition (5) was prepared.

### [Physical Properties of Silicone rubber]

Silicone rubber was manufactured by retaining the silicone rubber compositions (1) to (5) obtained in Manufacturing Examples 1 to 5 described above for one day in quiescence at a temperature of 25°C, whereby the compositions were cured. The hardness of the silicone rubber was measured by a type-A durometer in accordance with JIS K6253. Dumbbell specimens No. 3 specified by JIS 6251 were produced by retaining the silicone rubber compositions in quiescence at a temperature of 25°C. Tensile strength and relative elongation were measured in accordance with JIS K6251. The results are shown in Table 1.

**[Table 1]**

| Silicone rubber Composition | (1) | (2) | (3) | (4) | (5) |
|---|---|---|---|---|---|
| Hardness (JIS Type A) | 13 | 14 | 15 | 15 | 14 |
| Tensile Strength (MPa) | 1.7 | 3.0 | 2.4 | 2.8 | 3.7 |
| Elongation (%) | 1200 | 1400 | 1200 | 1200 | 1300 |

### [Practical Examples 1 to 5]

The silicone rubber compositions (1) to (5) obtained in Manufacturing Examples (1) to (5) were applied onto the silicone rubber coated surfaces of Nylon fiber fabrics coated with silicone rubber in an amount of 35 g/m² and having a width of 50 mm. The each pieces of silicone rubber coated fabric which were applied the silicone rubber-compositions (1) to (5) was placed onto another silicone rubber coated Nylon fiber fabric and bonded so that the silicone rubber coated surfaces faced each other and formed an adhesive-agent layer consisting of the silicone rubber composition. The shape of the adhesive-agent layer was adjusted to 50mm in width, 10 mm in length, and 0.7 mm in thickness with the use of a thickness gauge. Following this, the adhesive-agent layer was irradiated for 3 min. with 2,450 MHz of microwave radiation with a rated output power of 500 W (specified by JIS C9250). The treated products were retained for 2 hours at 25°C, whereby specimens with adhesive-agent layers which consist of cured silicone rubber-composition were obtained. As the results of microwave treatment, the adhesive-agent layers formed from the silicone rubber compositions were cured to the inner portion.

In accordance with JIS K6854, adhesive strength was measured by subjecting the specimen to a T-type peel test at a pulling rate of 200 mm/min.
Upon completion of the adhesive-strength test, the peeled surface of the adhesive-agent layer was visually observed, and then the cohesive failure factor as a percentage of the cohesive failure area to the total peeled surface area was determined. Furthermore, the number of holes formed by air bubbles on the peeled adhesive-agent layer surface having diameters of 0.1 to 0.3 mm were observed with the naked eye and recorded. Based on these results, the following evaluation criteria were used: absence of holes corresponded to grade 1; 1 to 20 holes (within the allowable range) corresponded to grade 2; 20 to 40 holes corresponded to grade 3; and more than 40 holes corresponded to grade 4. The results are shown in Table 2.

**[Table 2]**

| | Practical Examples | | | | |
|---|---|---|---|---|---|
| Examples | 1 | 2 | 3 | 4 | 5 |
| Silicone rubber Composition | (1) | (2) | (3) | (4) | (5) |
| Adhesive Strength (N/cm) | 44 | 46 | 41 | 49 | 45 |
| Cohesive Failure Factor (%) | 100 | 100 | 100 | 100 | 100 |
| Grade of absence of holes | 2 | 2 | 2 | 1 | 2 |

### [Comparative Examples 1 to 5]

The silicone rubber compositions (1) to (5) obtained in Manufacturing Examples (1) to (5) were applied onto the silicone rubber coated surfaces of Nylon fiber fabrics coated with silicone rubber in an amount of 35 g/m² and having a width of 50 mm. The each pieces of silicone rubber coated fabric which were applied the silicone rubber-compositions (1) to (5) was placed onto another silicone rubber coated Nylon fiber fabric and bonded so that the silicone rubber coated surfaces faced each other and formed an adhesive-agent layer consisting of the silicone rubber composition. The shape of the adhesive-agent layer was adjusted to 50mm in width, 10 mm in length, and 0.7 mm in thickness with the use of a thickness gauge. The products were then held for 3 min. in a hot-air-circulation oven at 80°C. The treated products were retained for 2 hours at 25°C, whereby specimens with adhesive-agent layers which consist of cured silicone rubber-composition were obtained.
In accordance with JIS K6854, adhesive strength was measured by subjecting the specimen to a T-type peel test at a pulling rate of 200 mm/min. Upon completion of the adhesive-strength test, the peeled surfaces of the adhesive-agent layers were visually observed, and then the cohesive failure factor as a percentage of the cohesive failure area to the total peeled surface areas was determined. Furthermore, the number of holes formed by air bubbles on the peeled adhesive-agent layer surfaces having diameters of 0.1 to 0.3 mm were observed with the naked eye and recorded. Based on these results, the following evaluation criteria were used: absence of holes corresponded to grade 1; 1 to 20 holes (within the allowable range) corresponded to grade 2; 20 to 40 holes corresponded to grade 3; and more than 40 holes corresponded to grade 4. The results are shown in Table 3.

**[Table 3]**

| | Comparative Examples | | | | |
|---|---|---|---|---|---|
| Examples | 1 | 2 | 3 | 4 | 5 |
| Silicone rubber Composition | (1) | (2) | (3) | (4) | (5) |
| Adhesive Strength (N/cm) | 44 | 41 | 42 | 48 | 45 |
| Cohesive Failure Factor (%) | 100 | 100 | 100 | 100 | 100 |
| Grade of absence of holes | 3 | 4 | 3 | 3 | 3 |

### [Practical Examples 6 and 7]

The silicone rubber compositions (3) and (4) obtained in Manufacturing Examples (3) and (4) were applied onto the silicone rubber coated surfaces of Nylon fiber fabrics coated with silicone rubber in an amount of 35 g/m² and having a width of 50 mm. The each pieces of silicone rubber coated fabric which were applied the silicone rubber-compositions (3) and (4) was placed onto another silicone rubber coated Nylon fiber fabric and bonded so that the silicone rubber coated surfaces faced each other and formed an adhesive-agent layer consisting of the silicone rubber composition. The shape of the adhesive-agent layer was adjusted to 50mm in width, 10 mm in length, and 0.7 mm in thickness with the use of a thickness gauge. Following this, the adhesive-agent layer was irradiated for 1 min. with 2,450 MHz of microwave radiation with a rated output power of 700 W (specified by JIS C9250). The treated products were retained for 2 hours at 25°C, whereby specimens with cured adhesive-agent layers which consist of the silicone rubber-compositions were obtained. As the results of microwave treatment, the adhesive-agent layers formed from the silicone rubber compositions were cured to the inner portion.
In accordance with JIS K6854, adhesive strength was measured by subjecting the specimen to a T-type peel test at a pulling rate of 200 mm/min.
Upon completion of the adhesive-strength test, the peeled surface of the adhesive-agent layer was visually observed, and then the cohesive failure factor as a percentage of the cohesive failure area to the total peeled surface area was determined. Furthermore, the number of holes formed by air bubbles on the peeled adhesive-agent layer surface having diameters of 0.1 to 0.3 mm were observed with the naked eye and recorded. Based on these results, the following evaluation criteria were used: absence of holes corresponded to grade 1; 1 to 20 holes (within the allowable range) corresponded to grade 2; 20 to 40 holes corresponded to grade 3; and more than 40 holes corresponded to grade 4. The results are shown in Table 4.

**[Table 4]**

| | Practical Example 6 | Practical Example 7 |
|---|---|---|
| Silicone rubber Composition | (3) | (4) |
| Adhesive Strength (N/cm) | 50 | 48 |
| Cohesive Failure Factor (%) | 100 | 100 |
| Grade of absence of holes | 2 | 1 |

### [Practical Example 8]

The silicone rubber composition (5) obtained in Manufacturing Example (5) was applied onto the silicone rubber coated surfaces of Nylon fiber fabrics coated with silicone rubber in an amount of 35 g/m² and having a width of 50 mm. The each pieces of silicone rubber coated fabric which were applied the silicone rubber-composition (5) was placed onto another silicone rubber coated Nylon fiber fabric and bonded so that the silicone rubber coated surfaces faced each other and formed an adhesive-agent layer consisting of the silicone rubber composition (5). The shape of the adhesive-agent layer was adjusted to 50mm in width, 10 mm in length, and 0.7 mm in thickness with the use of a thickness gauge. Following this, the adhesive-agent layer was irradiated with 2,450 MHz of microwave radiation for the duration and rated power (specified by JIS C9250) indicated in Table 5. The treated product was retained for 2 hours at 25°C, whereby the specimen with a cured adhesive-agent layer formed from silicone rubber composition was obtained. As the results of microwave treatment, the adhesive-agent layers formed from the silicone rubber composition (5) were cured to the inner portion.
In accordance with JIS K6854, adhesive strength was measured by subjecting the specimen to a T-type peel test at a pulling rate of 200 mm/min.
Upon completion of the adhesive-strength test, the peeled surface of the adhesive-agent layer was visually observed, and then the cohesive failure factor as a percentage of the cohesive failure area to the total peeled surface area was determined. Furthermore, the number of holes formed by air bubbles on the peeled adhesive-agent layer surface having diameters of 0.1 to 0.3 mm were observed with the naked eye and calculated. Based on these results, the following evaluation criteria were used: absence of holes corresponded to grade 1; 1 to 20 holes (within the allowable range) corresponded to grade 2; 20 to 40 holes corresponded to grade 3; and more than 40 holes corresponded to grade 4. The results are shown in Table 5.

**[Table 5]**

| | Practical Example 8 | | | | | |
|---|---|---|---|---|---|---|
| Silicone rubber Composition | (5) | | | | | |
| Rated High-frequency Power (W) | 170 | | | | 500 | |
| Irradiation Duration (Min.) | 2 | 3 | 5 | 7 | 1 | 3 |
| Adhesive Strength (N/cm) | 43 | 59 | 54 | 53 | 48 | 45 |
| Cohesive Failure Factor (%) | 100 | 100 | 100 | 100 | 100 | 100 |
| Grade of absence of holes | 1 | 1 | 2 | 2 | 2 | 2 |

### Industrial Applicability

The method of the present invention is suitable for manufacturing, e.g., air bags or the like by interposing pieces of synthetic fiber fabric impregnated or coated with silicone rubber and bonding them together with the use of a silicone rubber composition or by bonding or filling the areas of the aforementioned fabric which have to be sewn with the aforementioned composition.

## Claims

1. A method of bonding silicone rubber parts **characterized by** placing an adhesive-agent layer formed from a hydrosilylation-curable silicone rubber composition, between the silicone rubber parts and then irradiating the adhesive-agent layer with high-frequency or microwave radiation, wherein the hydrosilylation-curable silicone rubber composition comprises at least the following components: 100 parts by mass of a diorganopolysiloxane (A) which contains in one molecule on average at least two alkenyl groups; an organopolysiloxane (B) which contains in one molecule on average at least two silicon-bonded hydrogen atoms; the mole ratio of the silicon-bonded hydrogen atoms contained in this component to the alkenyl groups of component (A) ranges from 0.5 to 5; 5 to 100 parts by mass of a calcium carbonate powder (C); and a hydrosilylation catalyst (D) in an amount sufficient to accelerate curing of the aforementioned hydrosilylation-curable silicone rubber composition.

2. A method of bonding pieces of fabric treated with silicone rubber **characterized by** overlapping silicone rubber treated surfaces of pieces of a synthetic fiber fabric coated with a layer of a silicone rubber, placing an adhesive-agent layer formed from a hydrosilylation-curable silicone rubber composition between the overlapped areas and then irradiating the adhesive-agent layer with high-frequency or microwave radiation, wherein he hydrosilylation-curable silicone rubber composition comprises at least the following components: 100 parts by mass of a diorganopolysiloxane (A) which contains in one molecule on average at least two alkenyl groups; an organopolysiloxane (B) which contains in one molecule on average at least two silicon-bonded hydrogen atoms; the mole ratio of the silicon-bonded hydrogen atoms contained in this component to the alkenyl groups of component (A) ranges from 0.5 to 5; 5 to 100 parts by mass of a calcium carbonate powder (C); and a hydrosilylation catalyst (D) in an amount sufficient to accelerate curing of the aforementioned hydrosilylation-curable silicone rubber composition.

3. The method of bonding silicone rubber parts according to Claims 1 or 2, wherein the hydrosilylation-curable silicone rubber composition further comprising a silica powder (E) {used in an amount of 1 to 100 parts by mass for 100 parts by mass of component (A).

4. The method of bonding silicone rubber parts according to Claims 1-3, wherein the hydrosilylation-curable silicone rubber composition further comprising a quartz powder (F) with an average particle size in the range of 0.01 to 3.0 µm used in an amount of 5 to 100 parts by mass for 100 parts by mass of component (A).

5. The method of bonding silicone rubber parts according to any Claims from 1 to 4, wherein the hydrosilylation-curable silicone rubber composition further comprising a fine powder (G) selected from a metal oxide with magnetic properties, a carbon black, or a dielectric substance used in an amount of 1 to 50 parts by mass for 100 parts by mass of component (A).

6. A method of manufacturing an airbag **characterized by** overlapping silicone rubber treated surfaces of pieces of a synthetic fiber fabric coated with a layer of silicone rubber, placing an adhesive-agent layer formed from a hydrosilylation-curable silicone rubber composition
between the overlapped areas; and the irradiating the adhesive-agent layer with high-frequency or microwave radiation, wherein the hydrosilylation-curable silicone rubber composition comprises at least the following components: 100 parts by mass of a diorganopolysiloxane (A) which contains in one molecule on average at least two alkenyl groups; an organopolysiloxane (B) which contains in one molecule on average at least two silicon-bonded hydrogen atoms; the mole ratio of the silicon-bonded hydrogen atoms contained in this component to the alkenyl groups of component (A) ranges from 0.5 to 5; 5 to 100 parts by mass of a calcium carbonate powder (C); and a hydrosilylation catalyst (D) in an amount sufficient to accelerate curing of the aforementioned hydrosilylation-curable silicone rubber composition.

## Patentansprüche

1. Verfahren zum Verkleben von Siliconkautschukteilen, **gekennzeichnet durch** Anordnen einer Klebstoffschicht, die aus einer **durch** Hydrosilylierung härtbaren Siliconkautschukzusammensetzung gebildet ist, zwischen den Siliconkautschukteilen und dann Bestrahlen der Klebstoffschicht mit Hochfrequenz- oder Mikrowellenstrahlung, wobei die **durch** Hydrosilylierung härtbare Siliconkautschukzusammensetzung mindestens die folgenden Komponenten enthält: 100 Masseteile eines Diorganopolysiloxans (A), das in einem Molekül durchschnittlich mindestens zwei Alkenylgruppen enthält, ein Organopolysiloxan (B), das in einem Molekül durchschnittlich mindestens zwei siliciumgebundene Wasserstoffatome enthält, wobei das Molverhältnis der siliciumgebundenen Wasserstoffatome, die in dieser Komponente enthalten sind, zu den Alkenylgruppen der Komponente (A) von 0,5 bis 5 reicht; 5 bis 100 Masseteile Calciumcarbonatpulver (C) und einen Hydrosilylierungskatalysator (D) in einer Menge, die auseicht, um die Härtung der zuvor erwähnten **durch** Hydrosilylierung härtbaren Siliconkautschukzusammensetzung zu beschleunigen.

2. Verfahren zum Verkleben von Stoffteilen, die mit Siliconkautschuk behandelt sind, **gekennzeichnet durch** Überlappen von mit Siliconkautschuk behandelten Oberflächen von Teilen eines Stoffs aus synthetischen Fasern, der mit einer Schicht eines Siliconkautschuks beschichtet sind, Anordnen einer Klebstoffschicht, die aus einer **durch** Hydrosilylierung härtbaren Siliconkautschukzusammensetzung gebildet ist, zwischen den überlappenden Bereichen und dann Bestrahlen der Klebstoffschicht mit Hochfrequenz- oder Mikrowellenstrahlung, wobei die durch Hydrosilylierung härtbare Siliconkautschukzusammensetzung mindestens die folgenden Komponenten enthält: 100 Masseteile eines Diorganopolysiloxans (A), das in einem Molekül durchschnittlich mindestens zwei Alkenylgruppen enthält, ein Organopolysiloxan (B), das in einem Molekül durchschnittlich mindestens zwei siliciumgebundene Wasserstoffatome enthält, wobei das Molverhältnis der siliciumgebundenen Wasserstoffatome, die in dieser Komponente enthalten sind, zu den Alkenylgruppen der Komponente (A) von 0,5 bis 5 reicht; 5 bis 100 Masseteile Calciumcarbonatpulver (C) und einen Hydrosilylierungskatalysator (D) in einer Menge, die auseicht, um die Härtung der zuvor erwähnten **durch** Hydrosilylierung härtbaren Siliconkautschukzusammensetzung zu beschleunigen.

3. Verfahren zum Verkleben von Siliconkautschukteilen gemäß Anspruch 1 oder 2, wobei die durch Hydrosilylierung härtbare Siliconkautschukzusammensetzung ferner ein Siliciumdioxidpulver (E) enthält, das in einer Menge von 1 bis 100 Masseteilen pro 100 Masseteile der Komponente (A) verwendet wird.

4. Verfahren zum Verkleben von Siliconkautschukteilen gemäß Ansprüchen 1 bis 3, wobei die durch Hydrosilylierung härtbare Siliconkautschukzusammensetzung ferner ein Quarzpulver (F) mit einer mittleren Teilchengröße im Bereich von 0,01 bis 3,0 µm enthält, das in einer Menge von 5 bis 100 Masseteilen pro 100 Masseteile der Komponente (A) verwendet wird.

5. Verfahren zum Verkleben von Siliconkautschukteilen gemäß einem der Ansprüche 1 bis 4, wobei die durch Hydrosilylierung härtbare Siliconkautschukzusammensetzung ferner ein feines Pulver (G), das aus einem Metalloxid mit magnetischen Eigenschaften, einem Ruß oder einer dielektrischen Substanz ausgewählt ist, enthält, das in einer Menge von 1 bis 50 Masseteilen pro 100 Masseteile Komponente (A) verwendet wird.

6. Verfahren zur Herstellung eines Airbags, **gekennzeichnet durch** Überlappen von mit Siliconkautschuk behandelten Oberflächen von Teilen eines Stoffs aus synthetischen Fasern, der mit einer Schicht aus einem Siliconkautschuk beschichtet ist, Anordnen einer Klebstoffschicht, die aus einer **durch** Hydrosilylierung härtbaren Siliconkautschukzusammensetzung gebildet ist, zwischen den überlappenden Bereichen und dann Bestrahlen der Klebstoffschicht mit Hochfrequenz- oder Mikrowellenstrahlung, wobei die **durch** Hydrosilylierung härtbare Siliconkautschukzusammensetzung mindestens die folgenden Komponenten enthält: 100 Masseteile eines Diorganopolysiloxans (A), das in einem Molekül durchschnittlich mindestens zwei Alkenylgruppen enthält, ein Organopolysiloxan (B), das in einem Molekül durchschnittlich mindestens zwei siliciumgebundene Wasserstoffatome enthält, wobei das Molverhältnis der siliciumgebundenen Wasserstoffatome, die in dieser Komponente enthalten sind, zu den Alkenylgruppen der Komponente (A) von 0,5 bis 5 reicht; 5 bis 100 Masseteile Calciumcarbonatpulver (C) und einen Hydrosilylierungskatalysator (D) in einer Menge, die auseicht, um die Härtung der zuvor erwähnten **durch** Hydrosilylierung härtbaren Siliconkautschukzusammensetzung zu beschleunigen.

## Revendications

1. Procédé de collage de pièces en caoutchouc de silicone **caractérisé par** la mise en place d'une couche constituée d'un agent adhésif fabriquée à partir d'une composition de caoutchouc de silicone durcissable par hydrosilylation entre les pièces en caoutchouc de silicone puis l'irradiation de la couche constituée d'un agent adhésif avec un rayonnement haute fréquence ou micro-ondes, dans lequel la composition de caoutchouc de silicone durcissable par hydrosilylation comprend au moins les composants suivants : 100 parties en masse d'un dioranopolysiloxane (A) qui contient par molécule en moyenne au moins deux groupes alcényles ; un organopolysiloxane (B) qui contient par molécule en moyenne au moins deux atomes d'hydrogène liés à du silicium ; le rapport molaire des atomes d'hydrogène liés à du silicium contenus dans ce composant aux groupes alcényles du composant (A) variant de 0,5 à 5 ; de 5 à 100 parties en masse d'une poudre de carbonate de calcium (C) ; et un catalyseur d'hydrosilylation (D) en une quantité suffisante pour accélérer le durcissement de la composition de caoutchouc de silicone durcissable par hydrosilylation mentionnée précédemment.

2. Procédé de collage de pièces de tissu traitées avec du caoutchouc de silicone **caractérisé par** le chevauchement de surfaces traitées par du caoutchouc de silicone de pièces d'un tissu en fibres synthétiques revêtu d'une couche de caoutchouc de silicone, la mise en place d'une couche constituée d'un agent adhésif fabriquée à partir d'une composition de caoutchouc de silicone durcissable par hydrosilylation entre les régions où les surfaces se chevauchent puis l'irradiation de la couche constituée d'un agent adhésif avec un rayonnement haute fréquence ou micro-ondes, dans lequel la composition de caoutchouc de silicone durcissable par hydrosilylation comprend au moins les composants suivants : 100 parties en masse d'un dioranopolysiloxane (A) qui contient par molécule en moyenne au moins deux groupes alcényles ; un organopolysiloxane (B) qui contient par molécule en moyenne au moins deux atomes d'hydrogène liés à du silicium ; le rapport molaire des atomes d'hydrogène liés à du silicium contenus dans ce composant aux groupes alcényles du composant (A) variant de 0,5 à 5 ; de 5 à 100 parties en masse d'une poudre de carbonate de calcium (C) ; et un catalyseur d'hydrosilylation (D) en une quantité suffisante pour accélérer le durcissement de la composition de caoutchouc de silicone durcissable par hydrosilylation mentionnée précédemment.

3. Procédé de collage de pièces en caoutchouc de silicone selon les revendications 1 ou 2, dans lequel la composition de caoutchouc de silicone durcissable par hydrosilylation comprend en outre une poudre de silice (E) {utilisée en une quantité de 1 à 100 parties en masse pour 100 parties en masse du composant (A).

4. Procédé de collage de pièces en caoutchouc de silicone selon les revendications 1 à 3, dans lequel la composition de caoutchouc de silicone durcissable par hydrosilylation comprend en outre une poudre de quartz (F) ayant une taille moyenne des particules dans la plage de 0,01 à 3,0 µm utilisée en une quantité de 5 à 100 parties en masse pour 100 parties en masse du composant (A).

5. Procédé de collage de pièces en caoutchouc de silicone selon l'une quelconque des revendications 1 à 4, dans lequel la composition de caoutchouc de silicone durcissable par hydrosilylation comprend en outre une poudre fine (G) choisie parmi un oxyde de métal ayant des propriétés magnétiques, du noir de carbone ou une substance diélectrique utilisée en une quantité de 1 à 50 parties en masse pour 100 parties en masse du composant (A).

6. Procédé de fabrication d'un airbag **caractérisé par** le chevauchement de surfaces traitées par du caoutchouc de silicone de pièces d'un tissu en fibres synthétiques revêtu d'une couche de caoutchouc de silicone, la mise en place d'une couche constituée d'un agent adhésif fabriquée à partir d'une composition de caoutchouc de silicone durcissable par hydrosilylation
entre les régions où les surfaces se chevauchent ; et l'irradiation de la couche constituée d'un agent adhésif avec un rayonnement haute fréquence ou micro-ondes, dans lequel la composition de caoutchouc de silicone durcissable par hydrosilylation comprend au moins les composants suivants : 100 parties en masse d'un dioranopolysiloxane (A) qui contient par molécule en moyenne au moins deux groupes alcényles ; un organopolysiloxane (B) qui contient par molécule en moyenne au moins deux atomes d'hydrogène liés à du silicium ; le rapport molaire des atomes d'hydrogène liés à du silicium contenus dans ce composant aux groupes alcényles du composant (A) variant de 0,5 à 5 ; de 5 à 100 parties en masse d'une poudre de carbonate de calcium (C) ; et un catalyseur d'hydrosilylation (D) en une quantité suffisante pour accélérer le durcissement de la composition de caoutchouc de silicone durcissable par hydrosilylation mentionnée précédemment.
